# FASCICULE DE BREVET EUROPEEN

(11) **EP 1 866 108 B1**
(45) Date de publication et mention de la délivrance du brevet: **19.08.2009**
(21) Numéro de dépôt: 06743636.0
(22) Date de dépôt: 05.04.2006
(51) Int. Cl.: B21D 26/02, B62D 29/00, B62D 25/08

(54) **ELEMENT STRUCTUREL POUR VEHICULE AUTOMOBILE, VEHICULE AUTOMOBILE CORRESPONDANT, ET PROCEDE DE FABRICATION D'UN TEL ELEMENT STRUCTUREL**
STRUKTURELEMENT FÜR EIN KRAFTFAHRZEUG, ENTSPRECHENDES KRAFTFAHRZEUG UND VERFAHREN ZUR HERSTELLUNG EINES SOLCHEN STRUKTURELEMENTES
STRUCTURAL ELEMENT FOR A MOTOR VEHICLE, CORRESPONDING MOTOR VEHICLE, AND METHOD FOR PRODUCING ONE SUCH STRUCTURAL ELEMENT

(30) Priorité: 07.04.2005 FR 0503489
(43) Date de publication de la demande: 19.12.2007
(73) Titulaire: Faurecia Bloc Avant, 92000 Nanterre (FR)
(72) Inventeur: RIVIERE, Caroline, F-25700 Valentigney (FR); BERNE, Sébastien, F-70400 Luze (FR)
(74) Mandataire: Domenego, Bertrand
(86) Numéro de dépôt international: PCT/FR2006/000751
(87) Numéro de publication internationale: WO 2006/106230

(56) Documents cités:
- EP-A- 0 658 470
- WO-A-02/068257
- DE-A1- 19 618 626
- DE-C1- 19 854 076
- US-A- 6 131 897

## Description

La présente invention concerne un élément structurel pour véhicule automobile, du type comprenant :
- un corps métallique creux à section fermée présentant une surface externe et au moins un relief d'accrochage formé sur la surface externe ; et
- un corps en matière plastique surmoulé sur le corps métallique, le corps en matière plastique recouvrant la surface externe du premier corps métallique de façon à recouvrir au moins en partie le relief d'accrochage pour lier le deuxième corps en matière plastique au premier corps métallique.

Un tel élément structurel est généralement nommé « hybride » du fait de l'utilisation combinée de métal et de matière plastique.

Le document WO 2002/06 8257 décrit un tel élément.

Le document WO 2004/05 6610 décrit un élément structurel du type précité, dans lequel le corps métallique est un tube, et les reliefs d'accrochage sont prévus sous la forme d'ouvertures ménagées dans le tube.

Néanmoins, les ouvertures ménagées dans le tube réduisent la résistance mécanique du tube, et par conséquent de l'élément structurel.

Un but de l'invention est de proposer un élément structurel hybride présentant une résistance mécanique améliorée.

A cet effet, l'invention propose un élément structurel du type précité, **caractérisé en ce que** le relief d'accrochage est en saillie sur la surface externe du corps métallique, le relief d'accrochage étant fermé et venu de matière avec le corps métallique, et présentant une contre dépouille par rapport à la surface externe du corps métallique.

Selon d'autres modes de réalisation, l'élément structurel comprend une ou plusieurs des caractéristiques suivantes, prise(s) isolément ou selon toutes les combinaisons techniquement possibles :
- le relief d'accrochage possède une base de liaison avec le corps métallique, et un rebord en saillie par rapport à la base, le rebord présentant une face en contre dépouille par rapport à la surface externe du corps métallique ;
- le rebord est formé par un pli du relief d'accrochage ;
- le rebord est formé à une extrémité libre du relief d'accrochage opposée au corps métallique ;
- le rebord présente un contour périphérique sensiblement circulaire ou oblong ;
- la face en contre dépouille délimite, avec une région de la surface externe du corps métallique bordant la base, un passage dans lequel s'étend le corps en matière plastique ;
- le corps métallique est allongé et comprend au moins deux reliefs d'accrochage espacés suivant la longueur du corps métallique ;
- le corps métallique comprend au moins deux reliefs d'accrochage formés sur des parois opposées du corps métallique ;
- l'élément structurel est un élément de face avant de véhicule.

L'invention concerne également un véhicule automobile comprenant un élément structurel tel que défini ci-dessus.

L'invention concerne encore un procédé de fabrication d'un élément structurel tel que défini ci-dessus, dans lequel on forme une ébauche de relief d'accrochage, en saillie sur la surface externe du corps métallique, lors d'une étape de formage du corps métallique par positionnement du corps métallique dans un moule et introduction d'un fluide sous pression à l'intérieur du corps métallique, et on déforme l'ébauche pour obtenir le relief d'accrochage muni de la contre dépouille.

Avantageusement, on déforme l'ébauche en l'écrasant de façon à former un pli muni d'une face en contre dépouille par rapport à la surface externe du corps métallique.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'une face avant pour véhicule automobile selon l'invention ;
- la figure 2 est une vue schématique, en perspective, partielle et agrandie de la face avant de la figure 1 ;
- la figure 3 est une vue partielle en coupe selon III-III de la face avant des figures 1 et 2 ;
- les figures 4 à 7 illustrent des étapes d'un procédé de fabrication de la face avant de la figure 1 ; et
- la figure 8 est une vue analogue à celle de la figure 2 illustrant une face avant selon une variante.

Dans tout ce qui suit, les orientations sont des orientations habituelles d'un véhicule automobile.

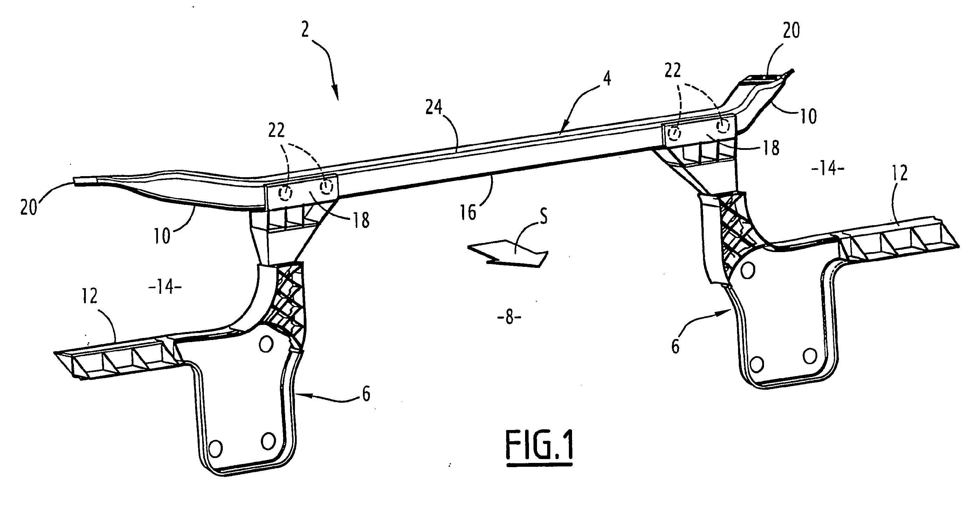

Ainsi, les termes « avant », « arrière », « droite », « gauche », « supérieur » et « inférieur » s'entendent par rapport à la position d'un conducteur et au sens de déplacement du véhicule en marche avant, matérialisé par une flèche S sur la figure 1.

Telle que représentée sur la figure 1, la face avant 2 comprend une traverse tubulaire métallique supérieure 4 qui s'étend sensiblement horizontalement, et deux montants latéraux en matière plastique 6 qui s'étendent sensiblement verticalement.

Les deux montants latéraux 6 sont espacés latéralement l'un de l'autre, et prolongent la traverse 4 vers le bas.

Une telle face avant 2 est destinée à être montée à l'avant d'un véhicule automobile pour supporter divers équipements tels que des blocs optiques, un groupe moto ventilateur, un radiateur, un condenseur...

Ainsi, les montants 6 délimitent entre eux un espace central 8 de réception par exemple d'un radiateur, d'un condenseur et d'un groupe moto ventilateur.

De même, les portions d'extrémité latérales 10 de la traverse 4 définissent, avec des branches 12 prolongeant les montants 6 latéralement vers l'extérieur, des espaces 14 de réception de blocs optiques.

La traverse 4 comprend une portion centrale 16 sensiblement rectiligne s'étendant entre les portions d'extrémité 10.

Les portions d'extrémité 10 sont inclinées par rapport à la portion centrale 16, et s'étendent vers l'arrière et latéralement vers l'extérieur.

Les portions d'extrémité supérieures 18 des montants 6 sont fixées sur la portion centrale 16 à proximité des portions d'extrémité 10.

La face avant 2 est sensiblement symétrique par rapport à un plan vertical médian. Seule la partie droite (à gauche sur la figure 1) de la face avant 2 sera décrite en détail par la suite.

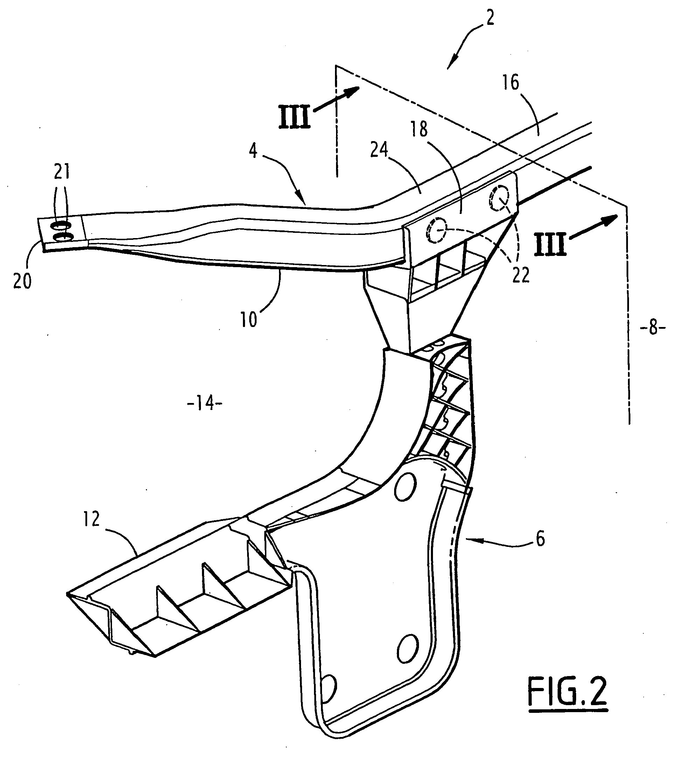

Tel que cela est représenté sur la figure 2, la portion d'extrémité 10 droite présente une extrémité libre 20 aplatie par écrasement de la traverse 4.

L'extrémité 20 est munie de deux lumières 21 de réception d'organes de fixation de la traverse 4 sur la structure du véhicule automobile, par exemple des boulons ou des vis (non représentés).

La portion d'extrémité 18 du montant 6 droit est surmoulée sur la traverse 4 en recouvrant des reliefs d'accrochage 22, représentés en pointillés, en saillie sur la surface externe 24 de la traverse 4, pour lier le montant 6 droit à la traverse 4.

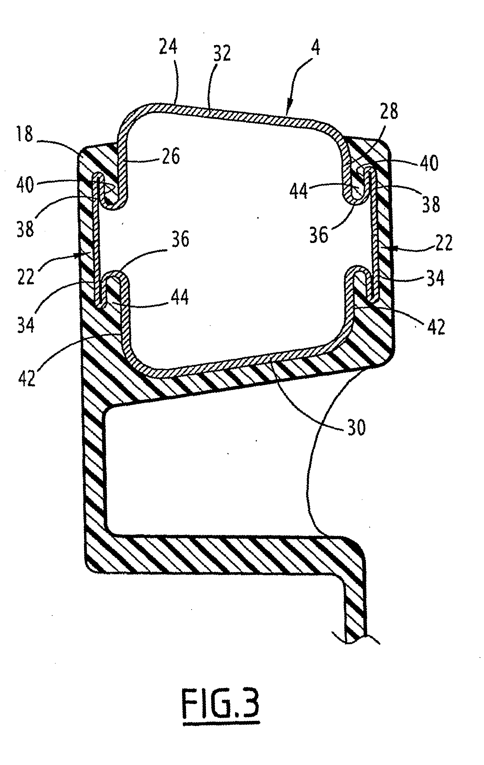

Telle que représentée sur la figure 3, qui est une vue en coupe dans un plan perpendiculaire à une direction longitudinale de la portion centrale 16, la traverse 4 possède une section fermée quadrangulaire sensiblement trapézoïdale, définie par quatre parois 26, 28, 30, 32 sensiblement planes reliées entre elles par des arrondis.

Plus précisément, la traverse 4 comprend une paroi arrière 26 et une paroi avant 28 parallèles et sensiblement verticales, reliées entre elles par une paroi inférieure 30 et une paroi supérieure 32 convergeant vers l'avant.

Des reliefs d'accrochage 22 sont formés sur chacune des parois arrière 26 et avant 28.

Chaque relief 22 est venu de matière avec la paroi 26, 28 correspondante, et est fermé, c'est-à-dire qu'il est dépourvu d'ouverture entre l'intérieur et l'extérieur de la traverse 4, ce qui préserve la résistance mécanique de la traverse 4.

Chaque relief 22 est obtenu par exemple par déformation de la paroi 26, 28 correspondante, comme cela sera mieux expliqué par la suite.

Chaque relief 22 présente, à une extrémité opposée à la paroi 26, 28 correspondante, une tête 34 plate circulaire, sensiblement parallèle à la paroi 26, 28 correspondante, et une base 36 circulaire reliant la tête 34 à la paroi 26, 28 correspondante.

La tête 34 de chaque relief 22 est plus large que la base 36, et présente un rebord périphérique 38 en saillie par rapport à la base 36. Comme cela sera mieux expliqué par la suite, chaque rebord 38 est formé d'un pli de matière.

Le rebord 38 présente une face 40 orientée sensiblement vers une région 42 de la surface externe 24 bordant la base 36. La face 40 est par exemple sensiblement parallèle à la région 42 correspondante.

La face 40 définit avec la région 42 correspondante un passage annulaire 44 autour de la base 36 du relief 22.

La face 40 est en contre dépouille et permet l'accrochage de la matière plastique constituant la portion d'extrémité 18 sur la surface externe 24.

En effet, la portion d'extrémité 18 du montant 6 droit recouvre les parois arrière 26, avant 28 et inférieure 30 de la traverse 4, la paroi supérieure 32 restant découverte.

Sur les parois arrière 26 et avant 28, la portion d'extrémité 18 recouvre les reliefs 22 en enveloppant les têtes 34, et en pénétrant dans les espaces 44 pour assurer un accrochage résistant du montant droit 6 sur la traverse 4.

L'accrochage est résistant du fait de la présence des faces 40 en contre dépouille, et de reliefs 22 sur les parois avant 26 et arrière 28 opposées de la traverse 24.

L'accrochage de la matière plastique sur la surface externe 24 sur des reliefs fermés 22 simplifie le surmoulage en évitant que la matière plastique ne pénètre à l'intérieur de la traverse 4 et ne la remplisse.

En revenant à la figure 2, la traverse 4 comprend deux ensembles de reliefs 22 espacés latéralement sur chacune de ses faces arrière 26 (non visibles) et avant 28, chaque ensemble permettant la fixation d'un montant 6.

Chaque ensemble comprend deux reliefs 22 espacés latéralement ménagés sur la paroi avant 26, et deux reliefs 22 espacés latéralement ménagés sur la paroi arrière 28 (figure 3).

Les reliefs 22 espacés améliorent l'accrochage de chaque montant 6 sur la traverse 4.

Dans une variante, la traverse 4 est constituée de deux tronçons métalliques tubulaires aboutés, un montant 6 étant fixés sur chaque tronçon.

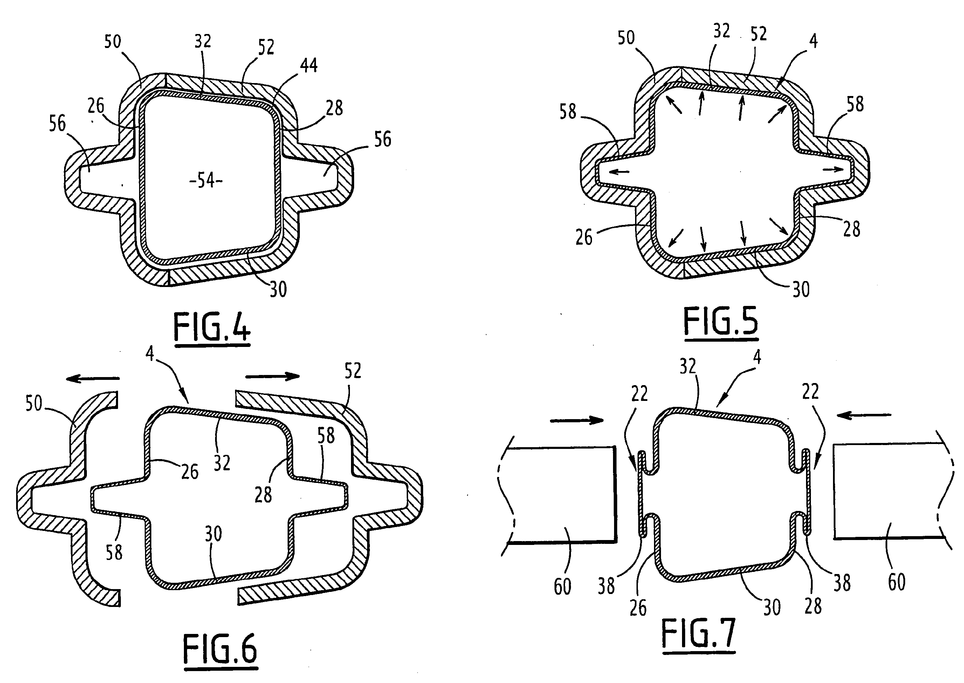

Un procédé de fabrication de la face avant 2 va être décrit en référence aux figures 4 à 7.

Comme illustré sur la figure 4, la traverse 4 possède initialement une section transversale trapézoïdale à parois 26, 28, 30, 32 lisses.

La traverse 4 est disposée entre deux empreintes 50, 52 d'un moule, définissant entre elles une cavité 54 présentant une forme correspondant à la forme souhaitée pour la traverse 4.

La cavité 54 possède une section de forme générale sensiblement analogue à celle de la traverse 4, en étant de dimensions légèrement supérieures.

La cavité 54 possède des évidements 56 tronconiques convergeant vers l'extérieur, situés en regard des futurs emplacements des reliefs 22 des parois arrière 26 et avant 28.

De façon connue en soi, et comme illustré sur la figure 5, lors d'une étape d'hydroformage, un liquide sous pression est introduit à l'intérieur de la traverse 4.

Le liquide sous pression déforme et plaque la traverse 4 sur les parois internes de la cavité 54, de sorte que la traverse 4 adopte la forme de la cavité 54.

La traverse 4 est légèrement déformée dans les régions dans lesquelles la cavité 54 présente une section sensiblement analogue à celle de la traverse 4.

Au niveau des évidements 56, les parois 26, 28 de la traverse 4 sont déformées dans une plus grande mesure.

A l'issue de l'étape d'hydroformage, la traverse 4 possède, à l'endroit des évidements 56, des ébauches 58 en saillie vers l'extérieur sur les parois 26 et 28, les ébauches 58 étant légèrement tronconiques convergeant vers l'extérieur.

Les ébauches tronconiques 58 permettent l'ouverture des parties 50, 52 afin de les dégager de la traverse 4, comme illustré sur la figure 6.

Les ébauches 58 présentent, du fait de leur déformation supérieure au reste de la traverse 4, une épaisseur de paroi inférieure à celle du reste de la traverse 4.

Ensuite, comme illustré sur la figure 7, les ébauches 58 sont déformées à l'aide de poinçons 60 appliqués sur l'extrémité libre de chaque ébauche 58 pour l'écraser vers la paroi 26, 28 correspondante.

Les ébauches 58, à parois plus minces, se déforment préférentiellement et sont écrasées jusqu'à former les têtes 34 aplaties et les rebords 38. Le rebord 38 de chaque relief 22 est constitué d'un pli jointif de matière résultant de l'écrasement de l'ébauche 58 correspondante.

De préférence, les extrémités 20 de la traverse 4 sont maintenues ouvertes pour permettre l'introduction d'un fluide à l'intérieur de la traverse 4 pendant l'étape d'hydroformage, et sont aplaties postérieurement à l'étape d'hydroformage.

Les portions d'extrémité 10 sont cintrées indifféremment avant ou après l'étape d'hydroformage.

Les montants 6 sont surmoulés sur la traverse 4 une fois que les reliefs 22 ont été formés.

Ce procédé de fabrication permet d'obtenir facilement la traverse 4 à section fermée munie des reliefs 22 fermés en saillie vers l'extérieur, et présentant des contre-dépouilles.

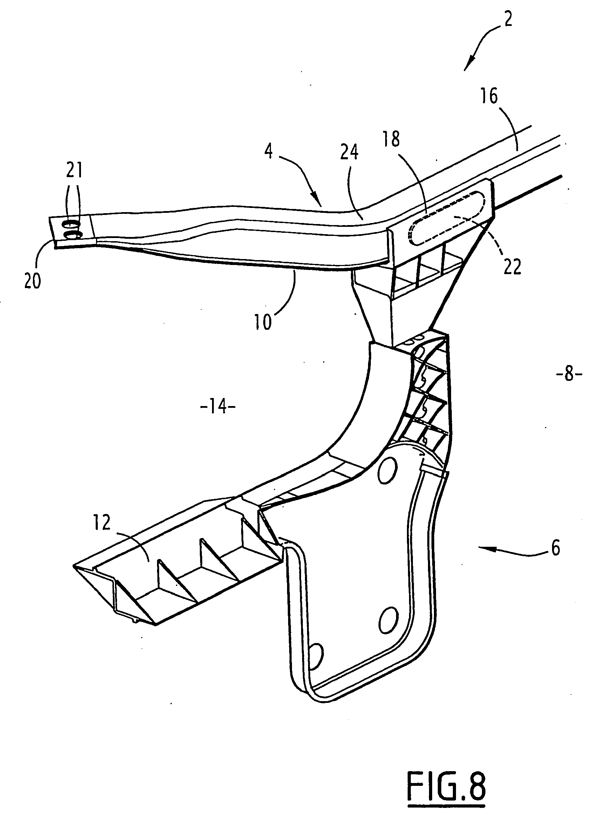

Les reliefs 22 présentent en variante un contour différent. Par exemple, comme illustré sur la figure 8, une paire de reliefs espacés transversalement est remplacée par un unique relief 22 possédant une forme allongée, de préférence oblongue, suivant la direction longitudinale de la traverse 4, et possédant un rebord périphérique oblong.

L'invention s'applique aux faces avant de véhicule automobile et de façon plus générale à tout autre type d'élément structurel de véhicule automobile.

## Revendications

1. Elément structurel pour véhicule automobile, du type comprenant :
- au moins un corps métallique (4) creux à section fermée présentant une surface externe (24) et au moins un relief d'accrochage (22) formés sur la surface externe (24) ; et
- au moins un corps en matière plastique (6) surmoulé sur le corps métallique, le corps en matière plastique (6) recouvrant la surface externe (24) du corps métallique de façon à recouvrir au moins en partie le relief d'accrochage (22) pour lier le corps en matière plastique (6) au corps métallique (4) ;
**caractérisé en ce que** le relief d'accrochage (22) est en saillie sur la surface externe (24) du corps métallique (4), le relief d'accrochage (22) étant fermé et venu de matière avec le corps métallique (4), et présentant une contre dépouille (40) par rapport à la surface externe (24) du corps métallique (4).

2. Elément structurel selon la revendication 1, **caractérisé en ce que** le relief d'accrochage (22) possède une base (36) de liaison avec le corps métallique (4), et un rebord (38) en saillie par rapport à la base (36), le rebord (38) présentant une face (40) en contre dépouille par rapport à la surface externe (24) du corps métallique (4).

3. Elément structurel selon la revendication 2, **caractérisé en ce que** le rebord (38) est formé par un pli du relief d'accrochage (22).

4. Elément structurel selon l'une des revendications 2 et 3, **caractérisé en ce que** le rebord (38) est formé à une extrémité libre du relief d'accrochage (22) opposée au corps métallique (4).

5. Elément structurel selon l'une quelconque des revendications 2 à 4, **caractérisé en ce que** le rebord (38) présente un contour périphérique sensiblement circulaire ou oblong.

6. Elément structurel selon l'une quelconque des revendications 2 à 5, **caractérisé en ce que** la face (40) en contre dépouille délimite, avec une région (42) de la surface externe (24) du corps métallique (4) bordant la base (36), un passage dans lequel s'étend le corps en matière plastique (6).

7. Elément structurel selon l'une quelconque des revendications précédentes, **caractérisé en ce que** le corps métallique (4) est allongé et comprend au moins deux reliefs d'accrochage (22) espacés suivant la longueur du corps métallique (4).

8. Elément structurel selon l'une quelconque des revendications précédentes, **caractérisé en ce que** le corps métallique (4) comprend au moins deux reliefs d'accrochage (22) formés sur des parois (26, 28) opposées du corps métallique (4).

9. Elément structurel selon l'une quelconque des revendications précédentes, **caractérisé en ce que** l'élément structurel est un élément de face avant de véhicule.

10. Véhicule automobile comprenant un élément structurel selon l'une quelconque des revendications précédentes.

11. Procédé de fabrication d'un élément structurel selon l'une quelconque des revendications 1 à 9, dans lequel on forme une ébauche (58) de relief d'accrochage (22), en saillie sur la surface externe (24) du corps métallique (4), lors d'une étape de formage du corps métallique (4) par positionnement du corps métallique (4) dans un moule (50, 52) et introduction d'un fluide sous pression à l'intérieur du corps métallique (4), et on déforme l'ébauche (58) pour obtenir le relief d'accrochage (22) muni de la contre dépouille.

12. Procédé de fabrication selon la revendication 11, **caractérisé en ce que** l'on déforme l'ébauche (58) en l'écrasant de façon à former un pli (38) muni d'une face (40) en contre dépouille par rapport à la surface externe (24) du corps métallique (4).

## Claims

1. Structural element for a motor vehicle, of the type comprising:
- at least one hollow metal body (4) which has a closed cross-section and which has an outer surface (24) and at least one fastening relief (22) which are formed on the outer surface (24); and
- at least one body of plastics material (6) which is over-moulded on the metal body, the body (6) of plastics material covering the outer surface (24) of the metal body so as to at least partially cover the fastening relief (22) in order to connect the body (6) of plastics material to the metal body (4); **characterised in that** the fastening relief (22) protrudes at the outer surface (24) of the metal body (4), the fastening relief (22) being closed and integral with the metal body (4), and having an undercut (40) relative to the outer surface (24) of the metal body (4).

2. Structural element according to claim 1, **characterised in that** the fastening relief (22) has a base (36) for connection to the metal body (4), and an edge (38) which protrudes relative to the base (36), the edge (38) having a face (40) which is undercut relative to the outer surface (24) of the metal body (4).

3. Structural element according to claim 2, **characterised in that** the edge (38) is formed by a fold of the fastening relief (22).

4. Structural element according to either claim 2 or claim 3, **characterised in that** the edge (38) is formed at a free end of the fastening relief (22) opposite the metal body (4).

5. Structural element according to any one of claims 2 to 4, **characterised in that** the edge (38) has a substantially circular or oblong peripheral contour.

6. Structural element according to any one of claims 2 to 5, **characterised in that** the undercut face (40) delimits, with a region (42) of the outer surface (24) of the metal body (4) which bounds the base (36), a passage in which the body (6) of plastics material extends.

7. Structural element according to any one of the preceding claims, **characterised in that** the metal body (4) is elongate and comprises at least two fastening reliefs (22) which are spaced-apart along the length of the metal body (4).

8. Structural element according to any one of the preceding claims, **characterised in that** the metal body (4) comprises at least two fastening reliefs (22) which are formed on opposing walls (26, 28) of the metal body (4).

9. Structural element according to any one of the preceding claims, **characterised in that** the structural element is a vehicle front face element.

10. Motor vehicle comprising a structural element according to any one of the preceding claims.

11. Method for producing a structural element according to any one of claims 1 to 9, wherein a blank (58) is formed of the fastening relief (22), which protrudes at the outer surface (24) of the metal body (4), during a step for shaping the metal body (4) by positioning the metal body (4) in a mould (50, 52) and introducing pressurised fluid inside the metal body (4) and the blank (58) is deformed in order to obtain the fastening relief (22) provided with the undercut.

12. Production method according to claim 11, **characterised in that** the blank (58) is deformed by crushing it in order to form a fold (38) which is provided with a face (40) which is undercut relative to the outer surface (24) of the metal body (4).

## Patentansprüche

1. Strukturelement für ein Kraftfahrzeug des Typs, der aufweist:
- mindestens einen hohlen Metallkörper (4) mit geschlossenem Querschnitt, der eine Außenfläche (24) und mindestens ein Befestigungsprofil (22) aufweist, das an der Außenfläche (24) ausgebildet ist, und
- mindestens einen Körper aus Kunststoffmaterial (6), der auf den Metallkörper aufgespritzt ist, wobei der Kunststoff-Körper (6) die Außenfläche (24) des Metallkörper derart bedeckt, dass das Befestigungsprofil (22) zumindest teilweise bedeckt wird zum Verbinden des Kunststoff-Körpers (6) mit dem Metallkörper (4),
**dadurch gekennzeichnet, dass** das Befestigungsprofil (22) an der Außenfläche (24) des Metallkörpers (4) hervorsteht, wobei das Befestigungsprofil (22) geschlossen und aus einem Material mit dem Metallkörper (4) ist und eine Hinterschneidung (40) relativ zu der Außenfläche (24) des Metallkörpers (4) aufweist.

2. Strukturelement gemäß Anspruch 1, **dadurch gekennzeichnet, dass** das Befestigungsprofil (22) eine Basis (36) zum Verbinden mit dem Metallkörper (4) und einen Rand (38) aufweist, der relativ zu der Basis (36) hervorsteht, wobei der Rand (38) eine relativ zu der Außenfläche (24) des Metallkörpers (4) hinterschnittene Fläche (40) aufweist.

3. Strukturelement gemäß Anspruch 2, **dadurch gekennzeichnet, dass** der Rand (38) durch eine Falte des Befestigungsprofils (22) gebildet wird.

4. Strukturelement gemäß einem der Ansprüche 2 und 3, **dadurch gekennzeichnet, dass** der Rand (38) an einem freien Ende des Befestigungsprofils (22) gegenüber dem Metallkörper (4) ausgebildet ist.

5. Strukturelement gemäß einem der Ansprüche 2 bis 4, **dadurch gekennzeichnet, dass** der Rand (38) einen im Wesentlichen kreisförmigen oder länglichen Umfangsumriss aufweist.

6. Strukturelement gemäß einem der Ansprüche 2 bis 5, **dadurch gekennzeichnet, dass** die hinterschnittene Fläche (40) mit einem Bereich (42) der Außenfläche (24) des Metallkörpers (4), der die Basis (36) einfasst, einen Durchgang begrenzt, in dem sich der Kunststoff-Körper (6) erstreckt.

7. Strukturelement gemäß einem der vorhergehenden Ansprüche, **dadurch gekennzeichnet, dass** der Metallkörper (4) länglich ist und mindestens zwei Befestigungsprofile (22) aufweist, die entlang der Länge des Metallkörpers (4) im Abstand voneinander angeordnet sind.

8. Strukturelement gemäß einem der vorhergehenden Ansprüche, **dadurch gekennzeichnet, dass** der Metallkörper (4) mindestens zwei Befestigungsprofile (22) aufweist, die an entgegengesetzten Wänden (26, 28) des Metallkörpers (4) ausgebildet sind.

9. Strukturelement gemäß einem der vorhergehenden Ansprüche, **dadurch gekennzeichnet, dass** das Strukturelement ein Element der Frontseite eines Fahrzeugs ist.

10. Kraftfahrzeug, das ein Strukturelement gemäß einem der vorhergehenden Ansprüche aufweist.

11. Verfahren zur Herstellung eines Strukturelements gemäß einem der Ansprüche 1 bis 9, wobei ein Formling (58) eines Befestigungsprofils (22), der an der Außenfläche (24) des Metallkörpers (4) hervorsteht, bei einem Schritt des Ausformens des Metallkörpers (4) durch Positionieren des Metallkörpers (4) in einer Form (50, 52) und Einführen eines Fluids unter Druck in das Innere des Metallkörpers (4) geformt wird, und wobei der Formling (58) zum Erhalten des mit der Hinterschneidung versehenen Befestigungsprofils (22) verformt wird.

12. Herstellungsverfahren gemäß Anspruch 11, **dadurch gekennzeichnet, dass** der Formling (58) verformt wird, indem er derart zusammengedrückt wird, dass eine Falte (38) gebildet wird, die mit einer relativ zu der Außenfläche (24) des Metallkörpers (4) hinterschnittenen Fläche (40) versehen ist.
